# EUROPÄISCHE PATENTSCHRIFT

(11) **EP 1 226 079 B1**
(45) Veröffentlichungstag und Bekanntmachung des Hinweises auf die Patenterteilung: **23.06.2004**
(21) Anmeldenummer: 00967894.7
(22) Anmeldetag: 20.10.2000
(51) Int. Cl.: B65D 81/26, C08G 18/00, B01D 53/28, F26B 21/08

(54) **THERMOPLASTISCHES TROCKENMITTEL**
THERMOPLASTIC DESICCANT
SICCATIF THERMOPLASTIQUE

(30) Priorität: 29.10.1999 DE 19952089
(43) Veröffentlichungstag der Anmeldung: 31.07.2002
(73) Patentinhaber: Henkel Kommanditgesellschaft auf Aktien, 40589 Düsseldorf (DE)
(72) Erfinder: MAGUNIA, Robert, 74834 Elztal-Dallau (DE); PETRY, Gerald, 41836 Hückelhoven (DE); KREBS, Michael, 40724 Hilden (DE)
(86) Internationale Anmeldenummer: PCT/EP2000/010327
(87) Internationale Veröffentlichungsnummer: WO 2001/032531

(56) Entgegenhaltungen:
- EP-A- 0 582 968
- WO-A-99/63288
- US-A- 4 195 009
- US-A- 5 932 680

## Beschreibung

Die vorliegende Erfindung betrifft die Verwendung von thermoplastischen Polymerzusammensetzungen mit reaktiven Isocyanatgruppen als Trockenmittel zum Schutz feuchtigkeitsempfindlicher Güter.

Eine Vielzahl von Gütern und Produkten des täglichen Lebens muß vor dem Zutritt von Feuchtigkeit, insbesondere der Feuchtigkeit aus der Umgebungsluft geschützt werden. Hierzu zählen insbesondere auch die hochreaktiven einkomponentigen feuchtigkeitshärtenden Klebstoffsysteme, wie beispielsweise einkomponentige feuchtigkeitshärtende Polyurethan-Klebstoffe, feuchtigkeitshärtende Systeme auf der Basis von reaktiven Silangruppen und dergleichen.

Ein übliches Verfahren zum Schutz derartiger feuchtigkeitsempfindlicher reaktiver Kleb-/Dichtstoffsysteme ist deren Verpackung in wasserundurchlässigen Gebinden wie z.B. verbördelten Metallkartuschen, dicht schließenden Hobbocks oder Fässern ggf. unter Mitverwendung von Innenverpackungen aus Verbundfolien bestehend aus einer Lage Metallfolie und einer oder mehrerer Lagen von Kunststofffolien. Derartige Verpackungen sind beispielsweise in der DE-A-3605422, der EP-A-413049 oder in der DE-U-8812012 beschrieben.

Besonders empfindlich gegen Feuchtigkeitszutritt sind feuchtigkeitsreaktive Polyurethan-Hotmelts, diese sind bekanntlich so aufgebaut, daß sie nur noch sehr wenige reaktive Isocyanatgruppen enthalten, die sich bereits mit Spuren von Feuchtigkeit umsetzen und vernetzte, nicht mehr schmelzbare Polymere ergeben. Bei der Abfüllung und Lagerung solcher Polyurethan-Hotmelts sind daher sehr hohe Anforderungen an den Feuchtigkeitsausschluß zu stellen. Dies sei an nachfolgendem Beispiel veranschaulicht: um 1 kg eines Polyurethan-Hotmelts mit einem Isocyanat-Gehalt von 1 % unter Umsetzung aller Isocyanat-Gruppen vollständig zu härten, ist ca. 1 Gramm Wasser erforderlich. Eine Hautbildung an der Oberfläche eines derartigen Hotmelts findet daher bereits statt, wenn nur Bruchteile dieser Wassermenge an die Oberfläche des Produktes gelangen.

Bei der Abfüllung derartiger Polyurethan-Hotmelts in Hobbocks, Fässern, Kartuschen oder Beuteln aus Verbundfolien können daher bereits Spuren eindiffundierender Feuchtigkeit den gesamten Gebinde-Inhalt durch Hautbildung unbrauchbar machen.

Um die Lagerstabilität eines abgefüllten Polyurethan-Hotmelts von 9 Monaten oder mehr zu erreichen, sind daher höchste Anforderungen an die Dichtigkeit der Verpackungen zu stellen, insbesondere im Hinblick auf die Dichtigkeit der verwendeten Dichtung sowie auf die Maßhaltigkeit der Gebinde. Da sich die Dichtigkeit der Gebinde auch bei 100 %iger Eingangskontrolle nur unzureichend überprüfen läßt, kommt es nach gegenwärtigem Stand der Technik häufiger vor, daß einzelne Gebinde erst nach der Abfüllung des Hotmelts als undicht erkannt werden. Dabei ist es äußerst nachteilig, daß auch der Kunde und Anwender solche schadhaften Verpackungen nicht erkennen kann, da die durchvernetzte unschmelzbare Haut bei Raumtemperatur von dem unvernetzten, schmelzbaren reaktiven Hotmelt nicht zu unterscheiden ist. Zwar ist es möglich, die Oberfläche bei jedem Gebindewechsel aufzuschmelzen und um zu beurteilen, ob bereits eine Hautbildung erfolgt ist, dieser Schritt ist jedoch arbeits- und zeitintensiv, zumal bei der industriellen Applikation im allgemeinen nur eine sehr kurze Zeitspanne für einen Gebindewechsel zur Verfügung steht. Der Verarbeiter bemerkt die Hautbildung im Gebinde in der Regel erst durch einen steilen Abfall der durch die Anlage geförderten Menge an geschmolzenem Hotmelt. Da die durchvernetzte Haut die Durchfußleitungen verstopfen kann, sind Fehlverklebungen und zeit- und kostenintensive Produktionsunterbrechungen die Folge.

Es hat nicht an Versuchen gefehlt, geeignete Verpackungen für reaktive Polyurethan-Hotmelts zu entwickeln, bei denen die oben beschriebenen Hautbildungen und Anhärtungen vermieden werden. So beschreibt die DE-A-4404631 ein Verfahren zur selbstdichtenden Versiegelung von Behältern. Es wird vorgeschlagen, die Abdeckung von feuchtigkeitsempfindlichen schmelzbaren Massen, wie z.B. Polyurethan-Hotmelts, mit einem Einlegeteil bestehend aus einer thermisch beständigen und wasserdampfundurchlässigen Kunststoff-Folie und einer Kunststoffscheibe aus einem thermoplastischen Material mit einem linearen Ausdehnungskoeffizienten von 6.10⁻⁵/K vorzunehmen. Diese Abdeckung erlaubt die selbstdichtende Versiegelung der Oberfläche derartiger feuchtigkeitsempfindlicher schmelzbarer Massen. Zusätzlich empfiehlt diese Schrift in einer besonderen Ausführungsform noch nach der Versiegelung der schmelzbaren Masse ein Säckchen mit Molekularsieb als Wasseradsorber auf das Einlegeteil zu geben und den Behälter anschließend mit einem Deckel zu verschließen.

Die Verwendung von Molekularsieben, Kieselgelen oder scharf getrockneten, zur Hydratbildung neigenden, hygroskopischen anorganischen Salze werden in dem Stand der Technik mehrfach als Wasserfänger bzw. Wasseradsorber vorgeschlagen, siehe z.B. DE-A-19722789, US-A-5900226, JP-02760769 B2 oder JP-07048546 A.

All diese Adsorber werden entweder dazu vorgeschlagen, die eingesetzten Rohstoffe zu trocknen oder als Trockenmittel in die Verpackung mit eingebracht zu werden. Für die letztgenannte Anwendung erfüllen diese Adsorber jedoch nur sehr bedingt ihre Funktion. Die Adsorption von Wasser an Molekularsieben, Kieselgelen oder anorganischen Salzen mit Kristallwasser ist nämlich reversibel, daß heißt das zunächst adsorbierte Wasser desorbiert auch wieder und kann dann mit den reaktiven Gruppen wie den Isocyanatgruppen eines Polyurethan-Schmelzklebstoffes irreversibel unter Vernetzung reagieren. Damit wird dieses Wasser aus dem Adsorptions-/Desorptions-Gleichgewicht irreversibel entfernt und führt letztendlich zu einer ggf. vollständigen Vernetzung des verpackten Gutes.

Das Dokument US-A-4195009 beschreibt die Verwendung von Polymerezusammensetzungen als wasserfestes Beschichtungsmaterial. Die Polymere werden aus einem Prekursor und Isocyanat erzeugt.

Es bestand also weiterhin Bedarf, verbesserte Möglichkeiten zum Schutz von feuchtigkeitsempfindlichen Gütern bereitzustellen.

Die erfindungsgemäße Lösung der Aufgabe ist den Patentansprüchen zu entnehmen. Sie besteht im Wesentlichen in der Verwendung von thermoplastischen Polymerzusammensetzungen mit reaktiven Isocyanatgruppen als Trockenmittel zur Verpackung feuchtigkeitsempfindlicher Güter.

In einer bevorzugten Ausführungsform haben diese thermoplastischen Polymere einen Gehalt an reaktiven NCO-Gruppen von 0.3 bis 20 Gew.%, vorzugsweise von 0.6 bis 15 Gew.% bezogen auf die Gesamtzusammensetzung.

Derartige reaktive Polymere können in an sich bekannter Weise durch Umsetzung von OH- oder aminogruppenhaltigen Verbindungen oder Polymeren mit einem Überschuß an Polyisocyanaten hergestellt werden. Vorzugsweise sollen diese Polyisocyanate eine hohe Reaktivität aufweisen, so daß bevorzugt aromatische Polyisocyanate Verwendung finden. Aus Kostengründen kann insbesondere das rohe, technische Isomeren- und Homologen-Gemisch des Diphenylmethandiisocyanat (MDI) verwendet werden. Als Polyole können dabei bei Raumtemperatur feste Polyesterpolyole oder Polyetherpolyole mit einem Schmelzpunkt unter 150°C oder schmelzbare Gemische aus Polyesterpolyolen, Polyetherpolyolen und Zuckern verwendet werden. Als Beispiele für Zucker sollen hier hauptsächlich die Monosaccharide oder Oligosaccharide wie z.B. Glucose, Galactose, Mannose, Fructose, Arabinose, Xylose, Ribose oder auch Rohrzucker genannt werden. Prinzipiell können auch andere niedermolekulare Polyole oder Polyamine zumindest anteilig mitverwendet werden. Wichtig ist dabei, daß das Umsetzungsprodukt aus Polyisocyanat und Polyalkohol noch bei Temperaturen unter 180°, vorzugsweise unter 130° schmelzbar ist, damit es in die möglichst oberflächenreiche Konfektionierungsform ohne Probleme überführt werden kann. Um eine möglichst hohe Absorptionskapazität für Wasser zu bewirken, wird das Polyisocyanat dabei zweckmäßiger Weise im hohen stöchiometrischen Überschuß eingesetzt. Nicht chemische gebundenes Polyisocyanat wird dabei physikalisch in der erstarrenden Matrix des thermoplastischen Trockenmittels fixiert, bis es nach seiner Abreaktion mit Wasser chemisch irreversibel an das Trockenmittel gebunden ist. Bei dem Einsatz höher funktioneller Polyisocyanate wie dem rohen MDI oder von Zuckern kann es sinnvoll sein, monofunktionelle C1-C12 Alkohole oder entsprechende sekundäre Amine als Kettenabbrecher hinzuzufügen, um eine hochgradige Vernetzung des Reaktionsgemisches und damit die Entstehung eines Duroplasten zu verhindern.

Um eine möglichst hohe Reaktivität des Trockenmittels gegenüber Feuchtigkeit zu erzielen, sind besonders bevorzugte Ausführungsformen der erfindungsgemäßen thermoplastischen Polymer-Trockenmittel-Zusammensetzungen mit einem relativ hohen Gehalt an Polyurethankatalysatoren versehen.

Als Katalysatoren können eine Vielzahl von gängigen Polyurethankatalysatoren eingesetzt werden, beispielhaft erwähnt seien Zinn(II)salze von Carbonsäuren, wie Zinn-II-acetat, -ethylhexoat und -diethylhexoat oder Dialkyl-Zinn(IV)-Carboxylate, deren Carbonsäuren mindestens 2, vorzugsweise wenigstens 10, insbesondere 14 bis 32 C-Atome haben. Es können auch Dicarbonsäuren eingesetzt werden. Als Säuren seien ausdrücklich genannt: Adipinsäure, Maleinsäure, Fumarsäure, Malonsäure, Bernsteinsäure, Pimelinsäure, Terephthalsäure, Phenylessigsäure, Benzoesäure, Essigsäure, Propionsäure sowie insbesondere 2-Ethylhexan-, Capryl-, Caprin-, Laurin-, Myristin-, Palmitin- und Stearinsäure. Konkrete Verbindungen sind Dibutyl- und Dioctyl-zinndiacetat, -maleat, -bis-(2-ethylhexoat), -dilaurat, Tributylzinnacetat, Bis(β-methoxycarbonyl-ethyl)zinndilaurat und Bis(β-acetyl-ethyl)zinndilaurat.

Auch Zinnoxide und -sulfide sowie -thiolate sind brauchbar. Konkrete Verbindungen sind: Bis(tributylzinn)oxid, Bis(trioctylzinn)oxid, Dibutyl- und Dioctylzinn-bis(2-ethyl-hexylthiolat) Dibutyl- und Dioctylzinndidodecylthiolat, Bis(β-methoxycarbonyl-ethyl)zinndidodecylthiolat, Bis(β-acetyl-ethyl)zinn-bis(2-ethylhexylthiolat), Dibutyl- und Dioctylzinndidodecylthiolat, Butyl- und Octylzinntris(thioglykolsäure-2-ethylhexoat), Dibutyl- und Dioctylzinn-bis(thioglykolsäure-2-ethylhexoat), Tributyl- und Trioctylzinn(thioglykolsäure-2-ethylhexoat) sowie Butylund Octylzinntris(thioethylenglykol-2-ethylhexoat), Dibutyl- und Dioctylzinnbis(thioethylenglykol-2-ethylhexoat), Tributyl- und Trioctylzinn(thioethylenglykol-2-ethylhexoat) mit der allgemeinen Formel Rₙ₊₁Sn(SCH₂CH₂OCOC₈H₁₇)₃₋ₙ, wobei R eine Alkylgruppe mit 4 bis 8 C-Atomen ist, Bis(β-methoxycarbonylethyl)zinn-bis(thioethylenglykol-2-ethylhexoat), Bis(β-methoxycarbonyl-ethyl)-zinnbis(thioglykolsäure-2-ethylhexoat), und Bis(β-acetyl-ethyl)zinn-bis(thioethylenglykol-2-ethylhexoat) und Bis(β-acetyl-ethyl)zinn-bis(thioglykolsäure-2-ethylhexoat.

Zusätzlich geeignet sind auch aliphatische tertiäre Amine insbesondere cyclischer Struktur. Unter den tertiären Aminen sind auch solche geeignet, die zusätzlich noch gegenüber den Isocyanaten reaktive Gruppen tragen, insbesondere Hydroxyl- und/oder Amino-Gruppen. Konkret genannt seien:
Dimethylmonoethanolamin, Diethylmonoethanolamin, Methylethylmonoethanolamin, Triethanolamin, Trimethanolamin, Tripropanolamin, Tributanolamin, Trihexanolamin, Tripentanolamin, Tricyclohexanolamin, Diethanolmethylamin, Diethanolethylamin, Diethanolpropylamin, Diethanolbutylamin, Diethanolpentylamin, Diethanohexylamin, Diethanolcyclohexylamin, Diethanolphenylamin sowie deren Ethoxylierungs- und Propoxylierungs-Produkte, Diaza-bicyclo-octan(Dabco), Triethylamin, Dimethylbenzylamin (Desmorapid DB, BAYER), Bis-dimethylaminoethylether (Calalyst A I, UCC), Tetramethylguanidin, Bis-dimethylaminomethyl-phenol, 2,2'-Dimorpholinodiethylether (DMDEE), 2-(2-Dimethylaminoethoxy)ethanol, 2-Dimethylaminoethyl-3-dimethylaminopropylether, Bis(2-dimethylaminoethyl)ether, N,N-Dimethylpiperazin, N-(2-hydroxyethoxyethyl)-2-azanorborane, Texacat DP-914 (Texaco Chemical), N,N,N,N-Tetramethylbutan-1,3-diamin, N,N,N,N-Tetramethylpropan-1,3-diamin, N,N,N,N-Tetramethylhexan-1,6-diamin, 1-Methylimidiazol, 2-Methyl-1-vinylimidazol, 1-Allylimidazol, 1-Phenylimidazol, 1,2,4,5-Tetramethylimidazol, 1 (3-Aminopropyl)imidazol, Pyrimidazol, 4-Dimethylamino-pyridin, 4-Pyrrolidinopyridin, 4-Morpholino-pyridin, 4-Methylpyridin und N-Dodecyl-2-Methyl-imidazol.

Besonders bevorzugt sind dabei solche Katalysatoren, die die Isocyanat/Wasserreaktion vor allen anderen Reaktionen der NCO-Gruppe begünstigen. Dies sind insbesondere die cyclischen und tertiären Aminoverbindungen, ggf. in Verbindung mit Zinnverbindungen. Die Katalysatoren werden dabei in einer Konzentration von 0,05 bis 15, insbesondere von 0,5 bis 10 Gew.% eingesetzt, bezogen auf die Summe von Hydroxyl-Verbindungen und Polyisocyanat.

Wichtig ist, daß die Ausgangskomponenten und das Herstellverfahren für das erfindungsgemäße Trockenmittel so gewählt werden, daß nach Umsetzung der Isocyanatgruppen mit den Hydroxylgruppen oder Aminogruppen die Zusammensetzung noch thermoplastischen Charakter hat, damit sie möglichst einfach so formgebend konfektioniert werden kann, daß eine möglichst hohe verfügbare Oberfläche für die chemische Absorption des Wassers zur Verfügung steht. Besonders bevorzugte Konfektionierungsformen sind dabei Herstellung eines möglichst feinkörnigen Granulates, dünne Schuppen, Extrusion eines dünnen Films oder eines offenporigen Schaums. Eine weitere erfindungsgemäße Ausführungsform des Trockenmittels kann im Spinnsprühverfahren derart hergestellt werden, daß eine Art "Non-Woven" Flächengebilde entsteht, ähnlich einem textilen Vlies oder Gewirke.

Das derartig konfektionierte, feuchtigkeitsreaktive thermoplastische Trockenmittel wird dann in einem feuchtigkeitsdicht verschlossenen Gebinde außerhalb des zu schützenden feuchtigkeitsempfindlichen Gutes angebracht. In diesem feuchtigkeitsdicht verschlossenen Gebinde wirkt das erfindungsgemäße Trockenmittel wie ein "Opfer-Hotmelt", das heißt die darin gebundenen Isocyanatgruppen opfern sich zum Absorbieren der im Luftraum befindlichen Feuchtigkeit, so daß das feuchtigkeitsempfindliche Gut vor der Reaktion mit Feuchtigkeit geschützt wird. Dies kann in einem Faß, Hobbock oder in einer Kartusche der Luftraum oberhalb des zu schützenden Gutes, beispielsweise eines feuchtigkeitshärtenden Schmelzklebstoffes in dem Zwischenraum zwischen Oberfläche der Masse und dem verschließenden Deckel des Gebindes sein. Wenn das zu schützende feuchtigkeitsempfindliche Gut wie z.B. ein vorkonfektionierter Schmelzklebstoff direkt in einen Verpackungsbeutel aus einer Verbundfolie eingeschweißt oder eingesiegelt wird, kann das wie vorbeschrieben konfektionierte thermoplastische Trockenmittel ebenfalls in den verbleibenden Luftraum der Verpackung eingebracht und eingeschweißt oder versiegelt werden.

Die Erfindung soll nun anhand von einigen Ausführungsbeispielen näher erläutert werden. Diese Ausführungsbeispiele umfassen nicht den gesamten Schutzbereich der Erfindung, dieser wird durch die Patentansprüche definiert.

### Beispiele

Aus einem Polyesterpolyol und Roh-MDI wurde ein schmelzklebstoffartige Masse erzeugt, dieser wurden 0.5 Gew.% an DMDEE-Katalysator zugesetzt. Danach wurde diese Masse auf etwa 120° aufgeschmolzen und auf eine Verbundfolie bestehend aus Polyethylen(PE)-Aluminium-Polyester(PES) auf die PES-Seite aufgetragen und mit einer zweiten, gleichen Folie abgedeckt, wobei diesmal die PE-Seite dem Klebstoff zugewendet wurde. Dieser Verbund wurde zwischen zwei Walzen auf eine Dicke von ca. 2 mm ausgewalzt und abgekühlt. Anschließend wurden aus diesem Verbund quadratische Stücke mit etwa 100 mm Seitenlänge ausgestanzt. Diese Stücke wurden einzeln in Aluminium-Verbundfolie bis zum endgültigen Gebrauch eingeschweißt.

Ein Polyurethanschmelzklebstoff (Macromelt QR 5300) wurde wie gewöhnlich in Hobbocks mit Aluminium-Inlinern eingefüllt. Anschließend wurden die inliner verschweißt und das gesamte Gut abgekühlt. Nachdem der Schmelzklebstoff abgekühlt und damit erstarrt war, wurde er endverpackt, dazu wurde der Inliner wieder geöffnet und ein Stück des oben beschriebenen thermoplastischen Trockenmittels, einseitig auf eine Folie als Träger aufgetragen, auf den Klebstoff gelegt, es wurde evakuiert und die Gebinde entweder evakuiert und dann verschlossen oder nur verschlossen. Dabei sollten die nicht evakuierten Folienbeutel undichte Gebinde simulieren. Die vier Folienbeutel wurden sechs Wochen im Klimawechseltest gelagert danach zeigte sich folgendes Ergebnis:

| | |
|---|---|
| Evakuierter Folienbeutel mit erfindungsgemäßem Trockenmittel | Trockenmittel leicht anvernetzt, Produkt in Ordnung |
| Folienbeutel mit erfindungsgemäßem Trockenmittel, undicht (ohne Vakuum) | Trockenmittel vernetzt, Produkt in Ordnung |
| Folienbeutel dicht (Vakuum) ohne Trockenmittel | Produkt in Ordnung |
| Folienbeutel undicht (ohne Vakuum), ohne Trockenmittel | Produkt vernetzt, das heißt unbrauchbar |

Aus den vorgenannten Lagerungsversuchen im Klimawechseltest wird deutlich, daß das erfindungsgemäße Trockenmittel eine deutliche Verbesserung gegenüber gängigem Stand der Technik gebracht hat. Selbst bei undichtem Gebinde wird die Lagerzeit bis zur Unbrauchbarkeit des verpackten Schmelzklebstoffes deutlich verlängert.

## Patentansprüche

1. Verwendung von thermoplastischen Polymerzusammensetzungen mit reaktiven Isocyanatgruppen als Trockenmittel zur Verpackung feuchtigkeitsempfindlicher Güter.

2. Verwendung nach Anspruch 1, **dadurch gekennzeichnet, daß** das thermoplastische Polymer einen Gehalt an reaktiven Isocyanatgruppen von 2 bis 30 Gew.%, vorzugsweise von 5 bis 20 Gew.% bezogen auf die Gesamtzusammensetzung hat.

3. Verwendung nach Anspruch 1 oder 2, **dadurch gekennzeichnet, daß** das Trockenmittel durch Umsetzung von OH- oder Aminogruppenhaltigen Polymeren mit einem Überschuß an Polyisocyanaten hergestellt wurde.

4. Verwendung nach Anspruch 3, **dadurch gekennzeichnet, daß** als Polyisocyanat aromatische Polyisocyanate, insbesondere die rohe, technische isomeren- und Homologenmischung des Diphenylmethandiisocyanats verwendet wird.

5. Verwendung nach Anspruch 3, **dadurch gekennzeichnet, daß** als Polyol bei Raumtemperatur feste Polyesterpolyole oder Polyetherpolyole mit einem Schmelzpunkt unter 150°C oder schmelzbare Gemische aus Polyesterpolyolen, Polyetherpolyolen und Zuckern verwendet werden.

6. Verwendung nach mindestens einem der vorhergehenden Ansprüche, **dadurch gekennzeichnet, daß** das thermoplastische Polymer durch Granulierung, Verschuppung, Extrusion als dünne Folie, im Spinnsprühverfahren zu einem "Non-Woven"-Flächengebilde oder zu einem offenporigen Schaum formgebend aufbereitet wird.

7. Verwendung nach Anspruch 6, **dadurch gekennzeichnet, daß** das Trockenmittel in einem feuchtigkeitsdicht verschlossenen Gebinde außerhalb des zu schützenden feuchtigkeitsempfindlichen Gutes angebracht ist.

## Claims

1. The use of thermoplastic polymer compositions containing reactive isocyanate groups as drying agents in the packaging of moisture-sensitive goods.

2. The use claimed in claim 1, **characterized in that** the thermoplastic polymer has a content of reactive isocyanate groups of 2 to 30% by weight and preferably 5 to 20% by weight, based on the composition as a whole.

3. The use claimed in claim 1 or 2, **characterized in that** the drying agent is produced by reacting polymers containing OH or amino groups with an excess of polyisocyanates.

4. The use claimed in claim 3, **characterized in that** aromatic polyisocyanates, more particularly the crude technical isomer and homolog mixture of diphenyl methane diisocyanate, are used as the polyisocyanate.

5. The use claimed in claim 3, **characterized in that** polyester polyols or polyether polyols solid at room temperature with a melting point below 150°C or fusible mixtures of polyester polyols, polyether polyols and sugars are used as the polyol.

6. The use claimed in at least one of the preceding claims, **characterized in that** the thermoplastic polymer is made up by granulation, flaking, extrusion as a thin film or spinning/spraying to form a nonwoven material or an open-cell foam.

7. The use claimed in claim 6, **characterized in that** the drying agent is arranged outside the moisture-sensitive product to be protected in a moisture-proof container.

## Revendications

1. Utilisation de compositionsp olymères thermoplastiquesc ontenant des groupes isocyanates réactifs, à titre de dessiccateur pour le conditionnement de matières sensibles à l'humidité.

2. Utilisation selon la revendication 1, **caractérisée en ce que** le polymère thermoplastique possède une teneure n groupes isocyanates réactifs de 2 à 30 % en poids, de préférence de 5 à 20 % en poids, rapportés à la composition totale.

3. Utilisation selon la revendication 1 ou 2, **caractérisée en ce qu'**on prépare le dessiccateur par mise en réaction de polymères contenant des groupes OH ou des groupes amino, avec un excès de polyisocyanates.

4. Utilisation selon la revendication 3, **caractérisée en ce qu'**on utilise,à titre de polyisocyanate, des polyisocyanates aromatiques, en particulier le mélange technique brut d'isomères et d'homologues du diphénylméthanediisocyanate.

5. Utilisation selon la revendication 3, **caractérisée en ce qu'**on utilise à titre de polyol, des polyesterpolyols ou des polyétherpolyols solides à la température ambiante possédant un point de fusion inférieur à 150 °C ou encore des mélanges fusibles constitués par des polyester-polyols, des polyétherpolyols et des sucres.

6. Utilisation selon au moins une des revendications précédentes, **caractérisée en ce qu'**on soumet à un traitement de façonnement le polymère thermoplastique par granulation, par transformation en écailles, par extrusion sous forme d'une mince feuille, dans le procédé de pulvérisation textile pour obtenir un produit plat sous forme d'un non-tissé ou encore pour obtenir une mousse à alvéoles ouvertes.

7. Utilisation selon la revendication 6, **caractérisée en ce qu'**on applique le dessiccateur dans une mballage en fût métalliquef ermé de manière étanche à l'humidité à l'extérieur de la matière sensible à l'humidité qui doit être protégé .
